# EUROPEAN PATENT SPECIFICATION

(11) **EP 3 069 969 B1**
(45) Date of publication and mention of the grant of the patent: **12.09.2018**
(21) Application number: 15380009.9
(22) Date of filing: 20.03.2015
(51) Int. Cl.: B62J 1/08, B62K 19/36

(54) **SEATPOST UNIT THAT DEFINES ONE OR TWO PREDERTERMINED SEAT HEIGHTS**
SATTELSTÜTZENEINHEIT, DIE EIN ODER ZWEI VORBESTIMMTE SITZHÖHEN BESTIMMT
UNITÉ DE TIGE DE SELLE QUI DÉFINIT UN OU DEUX HAUTEURS DE SIÈGE PRÉDÉTERMINÉES

(43) Date of publication of application: 21.09.2016
(73) Proprietor: ORBEA, S. COOP., 48269 Mallabia (BIZKAIA) (ES)
(72) Inventor: Auzmendi Arkarazo, Beñat, 48269 Mallabia (Bizkaia) (ES)
(74) Representative: Cueto, Sénida

(56) References cited:
- WO-A1-2011/059155
- CN-U- 203 593 074
- DE-A1-102004 009 927
- FR-A3- 2 581 952
- JP-A- 2010 260 529
- JP-Y1- S4 513 547
- KR-A- 20120 007 311
- KR-U- 20090 011 668
- US-A- 5 062 617

## Description

### Field of the Invention

The invention relates to a seatpost unit for a bicycle, and more specifically, to a seatpost unit whose position with respect to a seat tube can be adjusted to one or two different heights previously selected by the user.

### Prior Art

As is already known, a bicycle is a transportation vehicle that basically consists of a frame, two wheels connected rotationally to the frame, a pedal transmission system for causing the wheels to turn, a handlebar connected rotationally to the frame and connected to the front wheel via a fork to cause the front wheel to be turned, a seat fixed to the frame, a braking system that acts on the wheels, and optional suspension systems for the front and/or rear wheels.

To fix the seat to the frame, the bicycle includes a part generally known as a seatpost, consisting of a tube, at one end of which the seat is fixed and the other end of which is inserted inside a portion of the frame known as the seat tube. Normally, the depth of insertion of the seatpost into the seat tube is adjustable. Once the seatpost has been inserted to the desired depth, a clamp on the outside of the seat tube is tightened, applying pressure on the seat tube, in turn causing the seat tube to apply pressure on the seatpost and, as a result of friction between the seat tube and the seatpost, the seatpost does not move within the seat tube. To vary the depth of insertion of the seatpost, i.e., to adjust the height of the bicycle seat, one must simply loosen the clamp, which allows relative movement of the seatpost and the seat tube, adjust the position of the seat and the seatpost to the desired height and tighten the clamp to secure both parts. The seat can be adjusted to any height within the range offered by the seatpost, whereby adjustment is gradual and continuous.

Although cyclists do not tend to vary the height of the seat very often, there are some cycling practices that may require the user to adjust the height of the seat more frequently than normal. Specifically, in mountain biking, it is advisable to descend steep slopes with the seat adjusted to a significantly low height so as to avoid the bicycle tipping forwards and the cyclist being thrown off, with the consequent risk for the cyclist and the bicycle. On the other hand, when cycling uphill or on flat ground, it is more comfortable and efficient to pedal with the seat in a higher position. Therefore, the mountain cyclist is forced to repeatedly get off the bicycle, loosen the clamp, adjust the height of the seat and tighten the clamp. Due to time pressure, tiredness or ground conditions, the cyclist often fails to position the seat at the exact height and must get off the bicycle again to adjust the height of the seat more precisely, which has a negative impact on the smooth flow of the cycling experience and the user's satisfaction.

To facilitate the cyclist in the task of repeatedly adjusting the height of the seat, telescopic seatposts are available on the market, consisting essentially of a hydraulic cylinder similar to that used in office chairs. The cylinder is made up of a cylindrical outer sleeve and an inner shaft that can be moved along the outer sleeve via hydraulic action. The outer sleeve is inserted in the seat tube and is in contact with its inner walls. The seat is attached to the inner mobile shaft. The telescopic post includes an actuation cable that allows the cyclist to pull an actuator in the bicycle' s handlebar and cause the hydraulic cylinder to be unblocked, enabling the seat to lower or rise depending on whether or not the cyclist is supporting his/her weight on the seat. Although advanced, the telescopic posts have certain drawbacks. In particular, they are heavy, expensive and not very reliable. Therefore, they are not the optimum solution for mountain bike users.

Prior art document DE102004009927A1 teaches a device for the mounting of a bicycle seat into a seat tube of a bicycle frame. The device, on which the preamble of claim 1 is based, comprises a tubular body axially inserted into a tube of the frame. The device also comprises a longitudinal recess, a guide element and additional fixing means provided for preventing the seat tube from rotating around the tube axis, being this aim the main aim of the invention.

Prior art document WO2011059155A1 teaches another device that enables the control of the height of the seat tube without rotational movement in the axial direction. In this solution, a small guide or protrusion, provided in a fixing element configured as a clamp, can slide along a longitudinal recess.

The present invention aims to provide a post design that enables a user to easily lower or raise the seat to the precise desired height on the first attempt, i.e., without the need for subsequent fine adjustment to obtain this exact desired height. This, for example, will enable the mountain bike rider to adjust the height of the seat quickly and easily in accordance with terrain requirements.

### Brief Description of the Invention

The object of the invention is a seatpost unit, fitted with an upper end and a lower end, whereby the upper end is used to facilitate the connection of a bicycle seat and the lower end is configured to be inserted into a seat tube of a bicycle frame. The seatpost unit comprises a hollow tubular body arranged along a longitudinal axis, the hollow tubular body comprising an inner space, a generally cylindrical outer surface, and a longitudinal recess delimited by a longitudinal base. The seatpost unit also includes a guide element configured to be secured to the seat tube and which comprises a guide body that can be positioned inside the recess at adjustable longitudinal positions. The guide body has a first longitudinal end, a second longitudinal end opposite the first longitudinal end, a first face and a second face opposite the first face. The seatpost unit also comprises a fixing element for securing the guide element to a bicycle frame seat tube. Furthermore, the seatpost unit includes at least one stop element arranged in a fixed or adjustable position on the tubular body and fixed to the tubular body. Each stop element comprises a stop body at least partially placed inside the longitudinal recess, the stop body having a first longitudinal end and a second longitudinal end opposite the first longitudinal end.

The seatpost unit as per the invention can adopt at least one locked position in which the guide body is positioned inside the recess, and in which one of the longitudinal ends of the stop body of a stop element secured to the tubular body is longitudinally facing and in contact with a guide body, blocking the longitudinal displacement of the tubular body with respect to the seat tube in one direction.

Therefore, when the post unit is mounted on the seat tube and the guide element is fixed internally to the seat tube, the guide element acts as a guide for the tubular body of the seatpost unit, preferably preventing it from rotating within the seat tube. If the seatpost unit is provided with two stop elements, respectively above and below the guide element, the descent of the tubular body towards the interior of the seat tube is limited by the contact of the stop element placed on top of the guide element, defining a lower end position for the seat, whereas the rising of the tubular body with respect to the seat tube is limited by the contact of the stop element placed underneath the guide element, defining an upper end position for the seat.

By properly adjusting the position of the stop elements, the cyclist can set up the seat to adopt a lower height and a higher height, and readjust the seat easily and quickly from one height to the other.

### Brief Description of the Figures

The details of the invention can be seen in the accompanying figures, which do not intend to limit the scope of the invention:
- Figure 1 shows a perspective view of an embodiment of a seatpost unit as per the invention, fitted to a conventional seat tube, both of which are secured by a clamp.
- Figure 2 shoes the seatpost unit and the seat tube of the previous figure, having omitted the clamp.

- Figure 3 shows an exploded perspective view of the assembly of Figure 1.
- Figure 4 shows a front perspective view of the guide element of Figure 1.
- Figure 5 shows a rear perspective view of the guide element of Figure 1.
- Figure 6 shows a cross-sectional side elevation view of the seatpost unit in a first locked position in which the seat is in a higher position.
- Figure 7 shows a cross-sectional side elevation view of the seatpost unit in a second locked position in which the seat is in a lower position.
- Figure 8 shows an exploded view of the area of Figure 6 in which the guide element is located.
- Figure 9 shows an exploded view of the area of Figure 7 in which the guide element is located.

### Detailed Description of the Invention

The present invention is related to a seatpost unit to facilitate the connection of a bicycle seat to a bicycle frame in such a way that the seat is adjustable in height with respect to the frame.

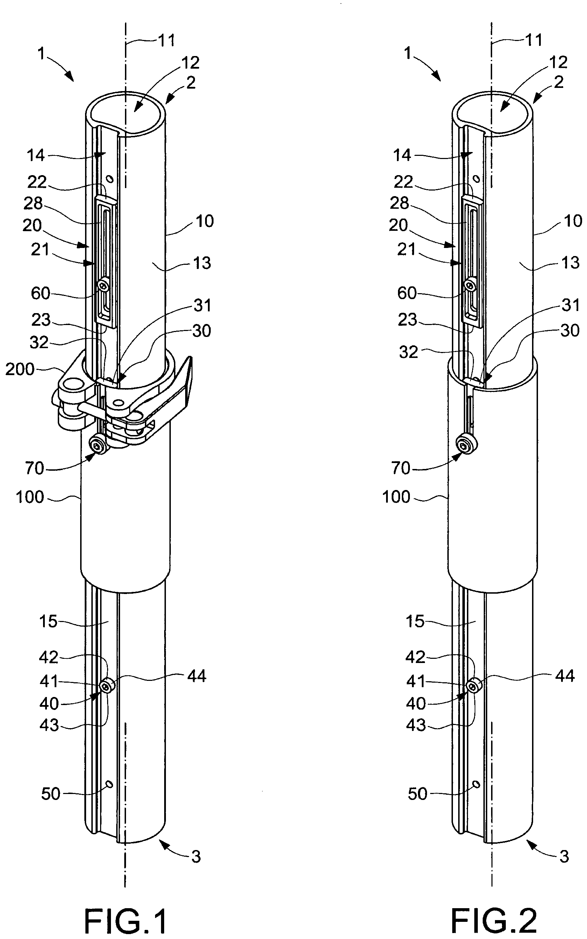

Figures 1 and 2 show two perspective views of a first embodiment of a seatpost unit (1) as per the present invention. The seatpost unit (1) is shown assembled to a conventional seat tube (100) of a bicycle frame; the seat tube (100) has only been partially illustrated so as not to hide details of the seatpost unit (1). Figure 1 also shows a clamp (200) fixing the position of the seatpost unit (1) with respect to the seat tube (100) so as to ensure that the seatpost unit (1) does not move inside the seat tube (100). In Figure 2, the clamp (200) has been omitted so as to show the seatpost unit (1) and its installation in the seat tube (100) in greater detail. In order to ensure that tightening of the clamp (200) tightens the seat tube (100) against the seatpost unit(1), the seat tube (100) comprises an upper slot (101) which allows the upper end of the seat tube (100) to constitute an open ring with certain radial elasticity.

As can be seen in the figures, the seatpost unit (1) is equipped with an upper end (2) and a lower end (3). The upper end (2) is used to facilitate the connection of a bicycle seat (not shown), whilst the lower end (3) is inserted into the seat tube (100). As already mentioned, the seat tube (100) has not been illustrated in its entirety; normally, the seat tube (100) is long enough to allow the lower end (3) to be housed inside the seat tube (100), however, this is not a key aspect for this invention, so any other seat tube (100) geometry or configuration can be contemplated.

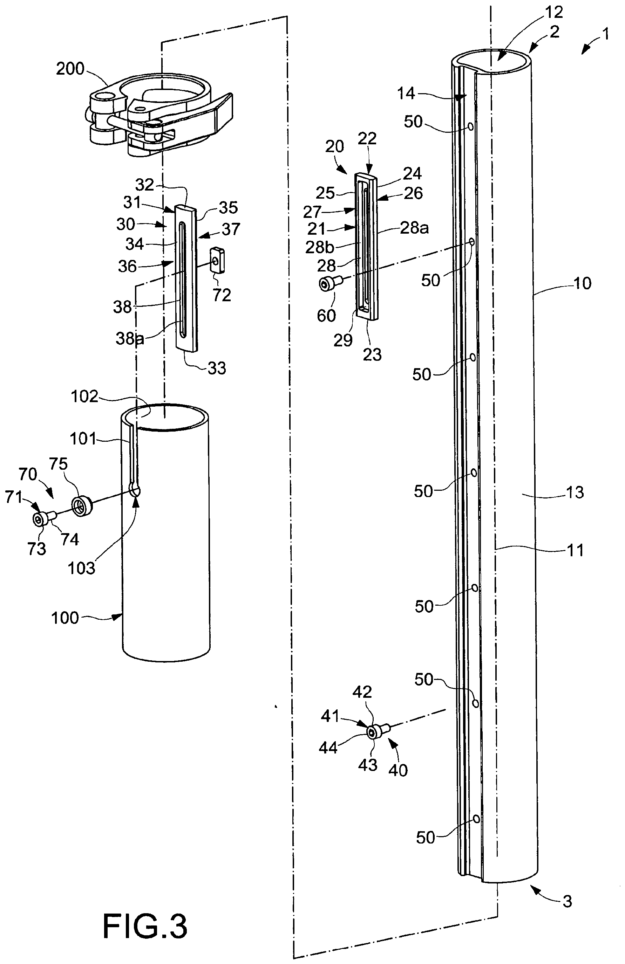

The seatpost unit (1) comprises a hollow tubular body (10) arranged along a longitudinal axis (11). The tubular body (10) has an inner space (12) and a generally cylindrical outer surface (13), adapted in size and shape to a cylindrical inner surface (102) of the seat tube (100), shown in Figure 3, as is known in the prior art, so that the seatpost unit (1) is fixed to the seat tube (100) as a result of the friction produced between both surfaces (13, 102) when the clamp (200) is tightened.

As can be seen in greater detail in Figure 3, the tubular body (10) of the seatpost unit (1) as per the invention comprises a longitudinal recess (14) delimited by a longitudinal base (15). Throughout this document, unless expressly specified otherwise, longitudinal is understood to be placed in the direction of the longitudinal axis (11) of the tubular body (10) of the seatpost unit (1).

The seatpost unit (1) further includes a guide element (30) that is configured to be fixed to the seat tube (100) and to move inside the longitudinal recess (14) of the tubular body (10) of the seatpost unit (1). For this purpose, the guide element (30) comprises a guide body (31) which can be placed inside the recess (14) in adjustable longitudinal positions. The guide body (31) comprises a first longitudinal end (32), a second longitudinal end (33) opposite the first longitudinal end (32), a first face (34) arranged on a first side (36) and a second face (35) opposite the first face (34), i.e., arranged on a second side (37) opposite the first side (36).

A fixing element (70) fixes the guide element (30) to the seat tube (100). In the present embodiment, the fixing element (70) comprises a bolt (71) and a nut (72) that allow the guide element (30) to be disconnectably attached to the upper slot (101) of the seat tube (100). The bolt (71) includes a head (73) and a threaded body (74). In other words, in the present embodiment of a seatpost unit (1), the guide element (30) and the fixing element (70) are separate pieces, offering a simple and extremely effective connection method for installing the invention on a conventional seat tube (100). However, alternative embodiments are contemplated in which the fixing element (70) may connect to the upper slot (101) of the seat tube (100) by different mechanisms, such as by a protuberance or hook that is an integral part of the guide element (30), by an adhesive, by a magnetic component, or the like. In addition, the guide element (30) of the present embodiment is entirely positioned in the interior face of the seat tube (100), is neither partially nor fully inserted in the upper slot (101), and does not protrude from the upper slot (101) to the exterior of the seat tube (100). However, there are possible alternative embodiments in which the guide element (30) can penetrate the upper slot (101) and even protrude externally, for example if the fixing element (70) forms an integral part of the guide element (30) and hooks on to the upper slot (101).

The seatpost unit (1) further includes at least one stop element (20, 40) associated to, and preferably attached to, the tubular body (10), and placed in a fixed or adjustable position of the tubular body (10). For example, the present embodiment includes two stop elements (20, 40), wherein a first stop element (20) is placed above the guide element (30) and a second stop element (40) is placed below the guide element (30), and wherein the position of each of them is adjustable, as is explained below. Each stop element (20, 40) comprises a stop body (21, 41) arranged least partially inside the longitudinal recess (14) and having a first longitudinal end (22, 42) and a second longitudinal end (23, 43) opposite the first longitudinal end (22, 42).

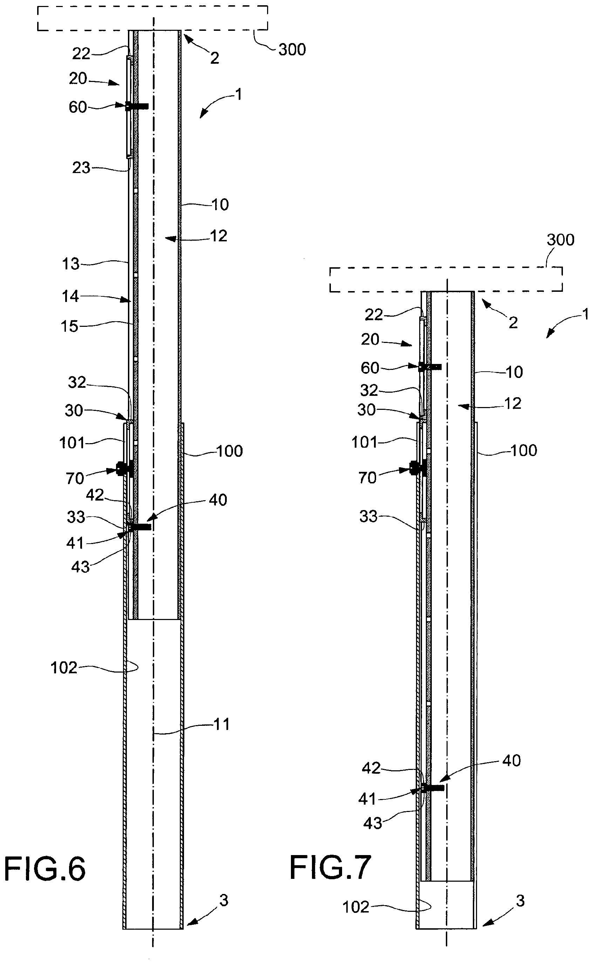

Figures 6 and 7 show two right side cross-sectional views of the seatpost unit (1) and the seat tube (100), having drawn the assembly of the seatpost unit (1) and the seat tube (100) in two different positions, in order to illustrate the operation of the seatpost unit (1). A seat (300) fixed to the upper end (2) of the seatpost unit (1) is also depicted very schematically. As has already been explained, when the clamp (200) is not tightened, the seatpost unit (1) can be displaced within the seat tube (100) in the direction of the longitudinal axis (11) and rotated about the longitudinal axis (11), in order to vary the height and angular position of the seat (300) with respect to the seat tube (100) and therefore with respect to the bicycle frame.

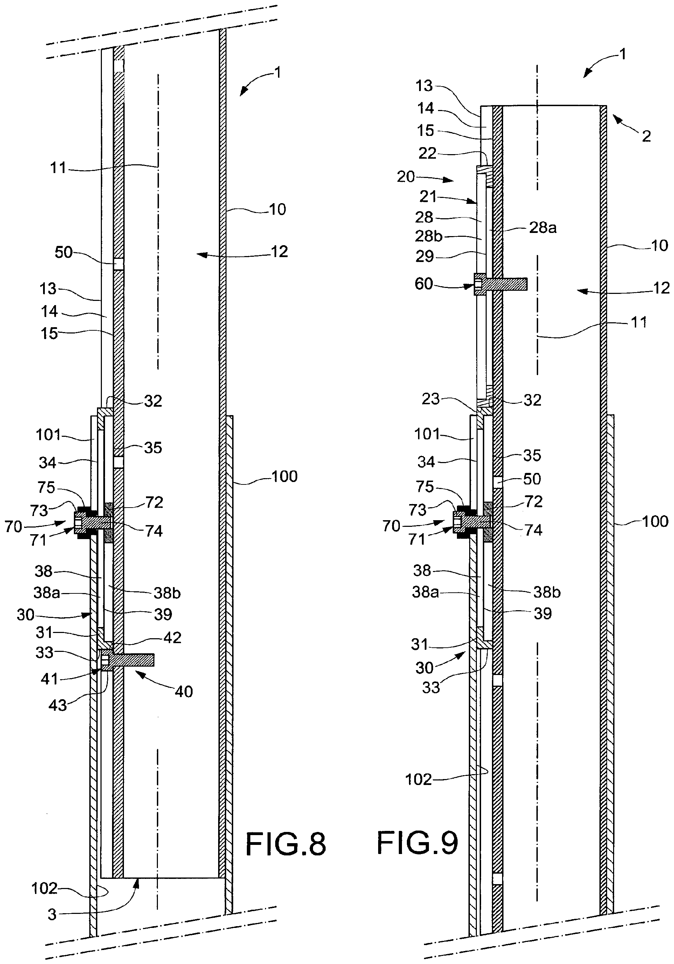

As can be seen in Figure 6 and in the exploded view of Figure 8, the guide body (31) of the guide element (30) is arranged entirely inside the longitudinal recess (14) of the tubular body (10), in order to ensure contact between the outer surface (13) of the tubular body (10) of the seatpost unit (1) and the inner surface (102) of the seat tube (100). For the same reason, and also to prevent the deterioration of the stop body (41) of the second stop element (40), the stop body (41) is also arranged entirely inside the longitudinal recess (14), without protruding externally from this longitudinal recess (14). As to the stop body (21) of the first stop element (20), the stop body (21) of the present embodiment is also arranged entirely inside the recess (14), although alternative embodiments are not ruled out as this stop body (21) is outside the seat tube (100) and therefore does not interact with the inner surface (102) of the seat tube (100).

In Figures 6 and 8, the seatpost unit (1) is shown in a first situation, in which the seatpost unit (1) has been displaced to one of the longitudinal ends (42, 43) of the stop body (41) -more specifically, the first end (42), which is longitudinally facing the second end (33) of the guide body (31)-has come into contact with this second end (33) of the guide body (31). In this position, due to the contact between both longitudinal ends (42, 33) and to the fact that the guide element (30) is fixed to the seat tube (100) whilst the stop element (40) is fixed to the tubular body (10), it is not possible to continue extracting the tubular body (10) from the seat tube (100). In other words, the situation of Figures 6 and 8 correspond to a locking position in which the seat (300) is in a higher position.

Figure 7 and the exploded view of Figure 9, on the other hand, show the seatpost unit (1) in a second situation, in which the seatpost unit (1) has been displaced downwards until one of the ends (22, 23) of the stop body (21) -more specifically, the second end (23), which is longitudinally facing the first end (32) of the guide body (31)- has come into contact with this first end (32) of the guide body (31). In this position, due to the contact between both ends (23, 31) and to the fact that the guide element (30) is fixed to the seat tube (100) whilst the stop element (20) is fixed to the tubular body (10), it is not possible to continue lowering the tubular body (10) with respect to the seat tube (100). Therefore, the situation of Figures 7 and 9 correspond to a second locking position in which the seat (300) is in a lower position.

In other words, the embodiment shown allows the user to loosen the clamp (200) and easily pass from the higher position of the seat (300) (Figures 6 and 8) to the lower seat position (Figures 7 and 9), by simply lifting or lowering the tubular body (10) until the stop effect described in the paragraphs above is produced.

In this way, the user of a bicycle fitted with the seatpost unit (1) of the present invention can quickly and easily pass from one locking position to another, or in other words, from the highest seat height to the lowest seat height or vice-versa, by simply loosening the clamp (200) and lowering or lifting the tubular body (10) until the seatpost unit (1) itself indicates the user that a stop has been reached and the seat is in the new position. The user is not forced to make a fine adjustment to the seat height; instead, by simply feeling that the tubular body (10) has reached the stop and re-tightening the clamp (200), the seat is perfectly adjusted in the new position. Furthermore, the disclosed invention is beneficial in that it allows providing any conventional seat tube (100) with the aforementioned functionality thanks to the fact that the guide element (30) is configured to secure to the seat tube (100) and the tubular body (10) is configured to fit into and move inside the conventional seat tube (100).

Alternative embodiments are contemplated in which the seatpost unit (1) comprises a single stop element (20), placed closer to the upper end (2) of the seatpost unit (1) than the guide body (31), in which case the seatpost unit (1) only offers a lower limit to the seat, whilst the user is free to raise the seat as far as he/she wishes (and the length of the tubular body (10) allows). Similarly, alternative embodiments are contemplated in which the seatpost unit (1) comprises a single stop element (40) closer to the lower end (3) of the seatpost unit (1) than the guide body (31), in which case the seatpost unit (1) only offers the seat an upper limit, whilst the user is free to lower the seat as far as he/she wishes.

To further improve the convenience of use and the rapidness in readjusting the seat, as shown in Figures 1 and 2, the guide body (31) of the guide element (30) may have a width that is adjusted to the recess (14) so that the guide body (31) can be displaced longitudinally along the recess (14) but cannot be displaced laterally inside this recess (14). This ensures that the guide element (30), and, in particular, the guide body (31), keep the tubular body (10) in a fixed rotational position with respect to the seat tube (100) and therefore the seat (300) does not turn when readjusting from one locking position to another.

In the embodiment shown in the figures and particularly in Figure 3, the guide body (31) of the guide element (30) is elongated and comprises an elongated longitudinal through hole (38). In turn, the fixing element (70) may be arranged in different positions along this elongated longitudinal through hole (38). This allows the longitudinal position of the guide element (30) in the seat tube (100) to be adjustable, i.e., that the guide element (30) can be adjusted to different heights, in order for the user to be able to adjust the maximum and/or minimum height of the seat to his/her liking.

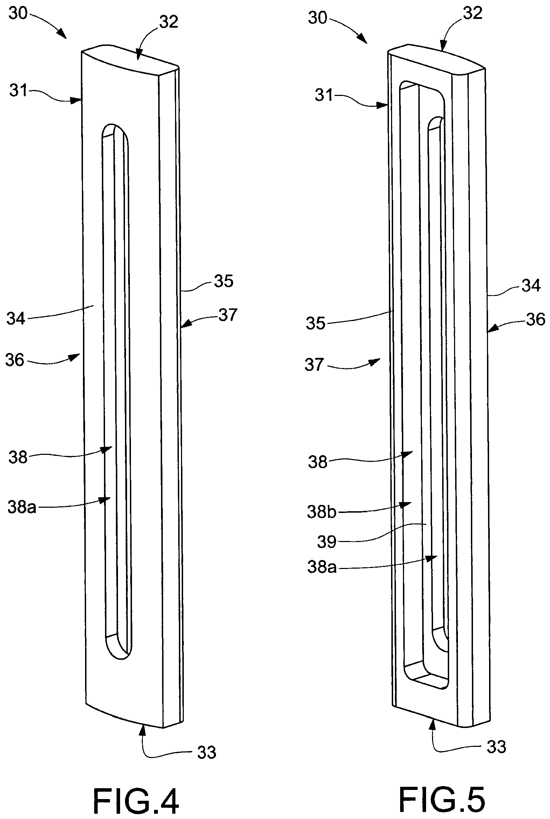

Furthermore, as can be seen in Figure 3, and in greater detail in the exploded views of Figures 4 and 5, the through hole (38) of the guide body (31) comprises a first section (38a) which extends from the first face (34) and a second section (38b) that is wider than the first section (38a) and that extends from the second face (35) to the first section (38a), wherein these sections (38a, 38b) are separated by a seat surface (39). This allows the second section (38b) to be used as non-rotational housing for a bolt of the fixing element (70). Therefore, as shown in Figure 4, and as can be seen in the sectional view of Figures 6 and 7, the fixing element (70) may comprise a bolt (71) and a nut (72), wherein the bolt (71) has a head (73) and a threaded body(74), wherein, in the locking position, the threaded body (74) crosses the first section (38a) and the second section (38b) of the guide body (31), and the nut (72) is non-rotationally and at least partially housed in the second section (38b). Furthermore, the nut (72) is supported against the seat surface (39) of the guide body (31) and fixed to an end of the threaded body (74) which protrudes from the seat surface (39) towards the second section (38b). This allows simple and extremely effective fixing of the guide element (30) to the conventional seat tube (100), simply by fixing the fixing element (70) and the guide element (30) to the upper slot (101) of the seat tube (100), generally at a lower end (103) of the slot. In order to adjust the fixing element (70) to the seat tube (100) without any gaps, the fixing element (70) may also comprise an elastic gasket (75) for the seating of the head (73).

Preferably, one or both of the stop elements (20, 40) can be fixed to the base (15) of the recess (14) of the tubular body (10). By fixable it is understood that they can be connected and disconnected from the base (15), as in the case of this embodiment, or that they can form a permanent or integral part of the tubular body (10). Being connectable to and disconnectable from the base has the added advantage that the user may choose whether to fix both stop elements (20, 40) to the tubular body (10), or just fix one of them, in order to choose whether two seat end positions are going to be implemented or just one.

In order to increase the adjustment possibilities of the seat end positions, the base (15) can have a series of separated holes (50) for fixing at least one stop element (20, 40) in different longitudinal positions. Depending on which hole(s) (50) the stop elements (20, 40) are connected to, the height of the seat (300) in the highest locking position and in the lowest locking position can be varied.

In the depicted embodiment, the stop element (40) placed under the guide element (30) is a bolt that is fixed to a hole (50) in the base (15) of the recess (14). The bolt or stop element (40) has a head (44) which is entirely housed in the recess (14) and constitutes the stop body (41) having the first longitudinal end (42) -intended to act as a stop against the guide element (30)- and the second longitudinal end (43). In other words, the stop element (40) is provided by a simple yet extremely effective mechanical component which is also easily connected to and disconnected from the tubular body (10). In alternative embodiments, the stop element (20) placed above the guide element (30) may be a bolt fixed to a hole (50) in the base (15) of the recess (14). In other embodiments, both stop elements (20, 40) may be bolts fixed to holes (50) in the base (15) of the recess (14).

The stop element (20) placed above the guide element (30) of the present embodiment includes, unlike the stop lower element (40), a stop body (21) and a separated bolt (60). The separated stop body (21) provides the first longitudinal end (22) and the second longitudinal end (23) -which acts as a stop-, and also has an elongated longitudinal through hole (28). The bolt (60) is fixed to a hole (50) in the base (15) of the recess (14) and can be arranged at different positions along this elongated longitudinal through hole (28) to adjust the longitudinal position of the stop body (21) inside the recess (14). This allows the position of the second end (23) of the stop element (20), and therefore the minimum height of the seat (300), to be adjusted. In alternative embodiments, the stop element (40) located under the guide element (30) can be similar to the stop element (20) of the present embodiment, i.e., have an elongated stop body with a longitudinal through hole, and a bolt. In other embodiments, both stop elements (20, 40) can present these characteristics.

Preferably, as can be seen in Figure 3, the stop body (21) comprises a first face (24) arranged on a first side (26) and a second face (25) opposite the first face (24), i.e., placed on a second side (27) opposite the first side (26). The through hole (28) of the stop element (20) comprises a first section (28a) that extends from the first face (24) and a second section (28b) that is wider than the first section (28a) and that extends from the second face (25) to the first section (28a), whereby these sections (28a, 28b) are separated by a seat surface (29) in which the bolt is housed, wherein the bolt does not protrude externally from the second section (28b). This allows a simple and adjusted bolt reception within the stop element (20).

Even more beneficially, the guide element (30) and the stop element (20) comprising a stop body (21) fitted with an elongated longitudinal through hole (28) are identical and interchangeable. This enables the user to interchange both pieces should they wear differently through use, hence extending the useful life of the seatpost unit (1).

In another aspect of the invention, the invention relates to a bicycle frame or a bicycle fitted with a seatpost unit (1) as per the claims.

## Claims

1. Seatpost unit (1), comprising an upper end (2) and a lower end (3), wherein said upper end is used to facilitate the connection of a bicycle seat and wherein said lower end is configured to be inserted into a seat tube of a bicycle frame, wherein it also comprises:
- a hollow tubular body (10) arranged along a longitudinal axis (11), comprising an inner space (12) and a generally cylindrical outer surface (13) having a longitudinal recess (14) delimited by a longitudinal base (15);
- a guide element (30) comprising an elongated guide body (31) that can be positioned inside the recess (14) in adjustable longitudinal positions and that comprises a first longitudinal end (32), a second longitudinal end (33) opposite the first longitudinal end (32), a first face (34) and a second face (35) opposite the first face (34);
- a fixing element (70) for securing the guide element (30) to a seat tube (100) of a bicycle frame;
- at least one stop element (20; 40), arranged in a fixed or adjustable position on the tubular body (10) and comprising a stop body (21; 41) at least partially arranged inside the longitudinal recess (14), the stop body (21; 41) having a first longitudinal end (22; 42) and a second longitudinal end (23; 43) opposite the first longitudinal end (22; 42); wherein
- the seatpost unit (1) can adopt a locking position in which said guide body (31) is positioned inside the recess (14), and in which one of the longitudinal ends (22, 23; 42, 43) of the stop body (21; 41) of a stop element (20; 40) fixed to the tubular body (10) is longitudinally facing and in contact with a longitudinal end (32, 33) of the guide body (31), **characterised in that**
- the guide body (31) of the guide element (30) comprises a longitudinal elongated through hole (38), and said fixing element (70) may be placed in different positions along said longitudinal elongated through hole (38).

2. Seatpost unit (1), in accordance with claim 1, **characterised in that** the guide body (31) of the guide element (30) has a width adjusted to the recess (14) so that it can be displaced longitudinally along the recess (14) but not displaced laterally inside said recess (14).

3. Seatpost unit (1), in accordance with claim 1, **characterised in that** the longitudinal elongated through hole (38) of the guide body (31) comprises a first section (38a) extending from the first face (34) and a second section (38b) extending from the second face (35) to the first section (38a), wherein said sections (38a, 38b) are separated by a seat surface (39).

4. Seatpost unit (1), in accordance with claim 3, **characterised in that** said fixing element (70) consists of a bolt (71) and a nut (72), whereby said bolt (71) comprises a head (73) and a threaded body (74), and in said locking position the threaded body (74) is arranged across said first section (38a) and said second section (38b) of the guide body (31), and the nut (72) is not-rotationally and at least partially housed in said second section (38b), supported against said seat surface (39) of the guide body (31) and fixed to an end of the threaded body(74) that protrudes from said seat surface (39) towards said second section (38b).

5. Seatpost unit (1), in accordance with claim 4, **characterised in that** said fixing element (70) further comprises an elastic gasket (75) for the seating of the head (73).

6. Seatpost unit (1), in accordance with claim 1, **characterised in that**, in said locking position, the stop element (20) is closer to the upper end (2) of the seatpost unit (1) than the guide body (31).

7. Seatpost unit (1), in accordance with claim 1, **characterised in that**, in said locking position, the stop element (40) is closer to the lower end (3) of the seatpost unit (1) than the guide body (31).

8. Seatpost unit (1), in accordance with claim 1, **characterised in that** at least one stop element (20; 40) is attachable to the base (15) of the recess (14) of the tubular body (10).

9. Seatpost unit (1), in accordance with claim 8, **characterised in that** said base (15) has a series of separate holes (50) for the fixing of at least one stop element (20; 40) in different longitudinal positions.

10. Seatpost unit (1), in accordance with claim 1, **characterised in that**, in said locking position, said at least one stop element (20; 40) does not protrude externally from the recess (14).

11. Seatpost unit (1), in accordance with claim 1, **characterised in that** at least said stop element (40) comprises a bolt that is fixed to a hole (50) in the base (15) of the recess (14), wherein said bolt has a head (44) that, in said locking position, is fully housed in the recess (14), and wherein said head (44) comprises said first longitudinal end (42) and said second longitudinal end (43).

12. Seatpost unit (1), in accordance with claim 1, **characterised in that** at least one stop body (21) of said stop element (20) is elongated and comprises an elongated longitudinal through hole (28), and **in that** it comprises a bolt (60) that is fixed to a hole (50) in the base (15) of the recess (14) and that can be placed in different positions along said elongated longitudinal through hole (28) to adjust the longitudinal position of said stop body (21) inside said recess (14), and wherein said stop body (21) comprises said first end (22) and said second end (23).

13. Seatpost unit (1), in accordance with claim 12, **characterised in that** said through hole (28) of said stop body (21) comprises a first section (28a) extending from a first face (24) of the stop body (21) and a second section (28b) extending from a second face (25) of the stop body (21) to the first section (28a), wherein said sections (28a, 28b) are separated by a seating surface (29) in which said bolt (60) is housed, wherein said bolt (60) does not protrude externally from said second section (28b).

14. Seatpost unit (1), in accordance with claims 4 and 12, **characterised in that** said guide element (30), and said stop element (20) comprising a stop body (21) fitted with an elongated longitudinal through hole (28), are identical and interchangeable.

15. Bicycle frame, comprising a seatpost unit (1) in accordance with any of the aforementioned claims.

16. Bicycle, comprising a seatpost unit (1) in accordance with any of the aforementioned claims 1 to 14.

## Patentansprüche

1. Sattelstützeneinheit (1), die ein oberes Ende (2) und ein unteres Ende (3) umfasst, wobei besagtes oberes Ende dafür verwendet wird, um den Anschluss eines Fahrradsitzes zu ermöglichen, und besagtes unteres Ende so gestaltet ist, um in das Sitzrohr eines Fahrradrahmens eingefügt zu werden, wobei sie ebenfalls Folgendes umfasst:
- einen hohlen Rohrkörper (10), angeordnet entlang einer Längsachse (11), der einen inneren Raum (12) und eine allgemein zylindrische Außenoberfläche (13) umfasst und eine Längsvertiefung (14) aufweist, die von einer Längsbasis (15) begrenzt ist;
- ein Führungselement (30), das einen langgestreckten Führungskörper (31) umfasst, der in die Vertiefung (14) in verstellbaren Längspositionen eingestellt werden kann, und der ein erstes Längsende (32), ein zweites Längsende (33) gegenüber dem ersten Längsende (32) sowie eine erste Stirnseite (34) und eine zweite Stirnseite (35) gegenüber der ersten Stirnseite (34) umfasst;
- ein Befestigungselement (70) zur Fixierung des Führungselements (30) an dem Sitzrohr (100) eines Fahrradrahmens;
- mindestens ein Anschlagelement (20; 40), angeordnet in einer festen oder verstellbaren Position an dem Rohrkörper (10), der einen Anschlagkörper (21; 41) umfasst, welcher mindestens teilweise in der Längsvertiefung (14) angeordnet ist, wobei der Anschlagkörper (21; 41) ein erstes Längsende (22; 42) und ein zweites Längsende (23; 43) gegenüber dem ersten Längsende (22; 42) hat; wobei
- die Sattelstützeneinheit (1) eine Verriegelungsposition annehmen kann, bei der besagter Führungskörper (31) in die Vertiefung (14) positioniert ist, und bei der eines der Längsenden (22, 23; 42, 43) des Anschlagkörpers (21; 41) eines an dem Rohrkörper (10) befestigten Anschlagelements (20; 40) längs gegenüber und in Kontakt mit einem Längsende (32, 33) des Führungskörpers (31) steht, **dadurch gekennzeichnet, dass**
- der Führungskörper (31) des Führungselements (30) ein langgestrecktes Durchgangsloch (38) umfasst, und besagtes Befestigungselement (70) in verschiedenen Positionen entlang von besagtem langgestreckten Durchgangsloch (38) platziert werden kann.

2. Sattelstützeneinheit (1), gemäß Anspruch 1, **dadurch gekennzeichnet, dass** der Führungskörper (31) des Führungselements (30) eine an die Vertiefung (14) angepasste Breite aufweist, so dass er längs entlang der Vertiefung (14), aber nicht seitlich in besagter Vertiefung (14) verschoben werden kann.

3. Sattelstützeneinheit (1), gemäß Anspruch 1, **dadurch gekennzeichnet, dass** das langgestreckte Durchgangsloch (38) des Führungskörpers (31) einen ersten Abschnitt (38a) umfasst, der sich von der ersten Stirnseite (34) erstreckt, und einen zweiten Abschnitt (38b), der sich von der zweiten Stirnseite (35) bis zum ersten Abschnitt (38a) erstreckt, wobei besagte Abschnitte (38a, 38b) durch eine Auflagefläche (39) getrennt sind.

4. Sattelstützeneinheit (1), gemäß Anspruch 3, **dadurch gekennzeichnet, dass** besagtes Befestigungselement (70) aus einem Bolzen (71) und einer Mutter (72) besteht, wobei besagter Bolzen (71) ein Kopfstück (73) und einen Gewindekörper (74) umfasst, und in besagter Verriegelungsposition der Gewindekörper (74) quer zu besagtem ersten Abschnitt (38a) und besagtem zweiten Abschnitt (38b) des Führungskörpers (31) angeordnet ist, und die Mutter (72) nicht-rotierend und mindestens teilweise in besagtem zweiten Abschnitt (38b) untergebracht ist, gestützt gegen besagte Auflagefläche (39) des Führungskörpers (31) und an einem Ende des Gewindekörpers (74) befestigt, der von besagter Auflagefläche (39) in Richtung von besagtem zweiten Abschnitt (38b) hervorsteht.

5. Sattelstützeneinheit (1), gemäß Anspruch 4, **dadurch gekennzeichnet, dass** besagtes Befestigungselement (70) ferner eine elastische Dichtung (75) für die Aufnahme des Kopfstücks (73) umfasst.

6. Sattelstützeneinheit (1), gemäß Anspruch 1, **dadurch gekennzeichnet, dass** in besagter Verriegelungsposition das Anschlagelement (20) näher an dem oberen Ende (2) der Sattelstützeneinheit (1) liegt als der Führungskörper (31).

7. Sattelstützeneinheit (1), gemäß Anspruch 1, **dadurch gekennzeichnet, dass** in besagter Verriegelungsposition das Anschlagelement (40) näher an dem unteren Ende (3) der Sattelstützeneinheit (1) liegt als der Führungskörper (31).

8. Sattelstützeneinheit (1), gemäß Anspruch 1, **dadurch gekennzeichnet, dass** mindestens ein Anschlagelement (20; 40) an der Basis (15) der Vertiefung (14) des Rohrkörpers (10) befestigt werden kann.

9. Sattelstützeneinheit (1), gemäß Anspruch 8, **dadurch gekennzeichnet, dass** besagte Basis (15) eine Reihe von separaten Löchern (50) für die Befestigung von mindestens einem Anschlagelement (20; 40) in verschiedenen Längspositionen aufweist.

10. Sattelstützeneinheit (1), gemäß Anspruch 1, **dadurch gekennzeichnet, dass** in besagter Verriegelungsposition das besagte mindestens eine Anschlagelement (20; 40) nicht nach außen aus der Vertiefung (14) hervorsteht.

11. Sattelstützeneinheit (1), gemäß Anspruch 1, **dadurch gekennzeichnet, dass** mindestens das besagte Anschlagelement (40) ein Bolzen umfasst, das an einem Loch (50) in der Basis (15) der Vertiefung (14) befestigt ist, wobei besagter Bolzen ein Kopfstück (44) hat, das in besagter Verriegelungsposition vollständig in der Vertiefung (14) untergebracht ist, und wobei besagtes Kopfstück (44) besagtes erstes Längsende (42) und besagtes zweites Längsende (43) umfasst.

12. Sattelstützeneinheit (1), gemäß Anspruch 1, **dadurch gekennzeichnet, dass** mindestens ein Anschlagkörper (21) von besagtem Anschlagelement (20) langgestreckt ist und ein längs verlaufendes Durchgangsloch (28) umfasst, sowie dadurch, dass es einen Bolzen (60) umfasst, der an einem Loch (50) in der Basis (15) der Vertiefung (14) befestigt ist, und dass es in verschiedenen Positionen entlang von besagtem längs verlaufenden Durchgangsloch (28) platziert werden kann, um die Längsposition von besagtem Anschlagkörper (21) in besagter Vertiefung (14) einzustellen, und wobei besagter Anschlagkörper (21) besagtes erste Ende (22) und besagtes zweite Ende (23) umfasst.

13. Sattelstützeneinheit (1), gemäß Anspruch 12, **dadurch gekennzeichnet, dass** besagtes Durchgangsloch (28) von besagtem Anschlagkörper (21) einen ersten Abschnitt (28a) umfasst, der sich von einer ersten Stirnseite (24) des Anschlagkörpers (21) erstreckt, und einen zweiten Abschnitt (28b), der sich von einer zweiten Stirnseite (25) des Anschlagkörpers (21) bis zu dem ersten Abschnitt (28a) erstreckt, wobei besagte Abschnitte (28a, 28b) von einer Auflagefläche (29) getrennt sind, in der besagter Bolzen (60) untergebracht ist, wobei besagter Bolzen (60) nicht nach außen aus besagtem zweiten Abschnitt (28b) hervorsteht.

14. Sattelstützeneinheit, gemäß den Ansprüchen 4 und 12, **dadurch gekennzeichnet, dass** besagtes Führungselement (30) und besagtes Anschlagelement (20), die einen Anschlagkörper (21) umfassen, der mit einem längs gestreckten Durchgangsloch (28) ausgestattet ist, identisch und austauschbar sind.

15. Fahrradrahmen, der eine Sattelstützeneinheit (1) gemäß einer der vorgenannten Ansprüche umfasst.

16. Fahrrad, das eine Sattelstützeneinheit (1) gemäß einem der vorgenannten Ansprüche 1 bis 14 umfasst.

## Revendications

1. Ensemble de tige de selle (1), comprenant une extrémité supérieure (2) et une extrémité inférieure (3), où ladite extrémité supérieure est utilisée pour faciliter l'insertion d'une selle de vélo et où ladite extrémité inférieure est conçue pour être insérée dans un tube de selle d'un cadre de vélo, et qui comprend également:
- un corps tubulaire creux (10) disposé le long d'un axe longitudinal (11), comprenant un espace intérieur (12) et une surface extérieure généralement cylindrique (13) avec une encoche en longueur (14) délimitée par une base longitudinale (15);
- un élément de guidage (30) comprenant un corps de guidage allongé (31) qui peut être placé à l'intérieur de l'encoche (14) dans des positions longitudinales réglables et qui comprend une première extrémité longitudinale (32), une deuxième extrémité longitudinale (33) opposée à la première extrémité longitudinale (32), une première face (34) et une deuxième face (35) opposée à la première face (34);
- un élément de fixation (70) pour sécuriser l'élément de guidage (30) à un tube de selle (100) d'un cadre de vélo;
- au moins un élément d'arrêt (20; 40) disposé dans une position fixe ou réglable sur le corps tubulaire (10) et comprenant un corps d'arrêt (21; 41) au moins partiellement disposé à l'intérieur de l'encoche longitudinale (14), le corps d'arrêt (21; 41) ayant une première extrémité longitudinale (22; 42) et une deuxième extrémité longitudinale (23; 43) opposée à la première extrémité longitudinale (22; 42); où
- l'ensemble de tige de selle (1) peut prendre une position bloquée dans laquelle ledit corps de guidage (31) est placée à l'intérieur de l'encoche (14), et dans laquelle l'une des extrémités longitudinales (22, 23 ; 42, 43) du corps d'arrêt (21; 41) d'un élément d'arrêt (20; 40) fixé au corps tubulaire (10) fait face en longueur et est en contact avec une extrémité longitudinale (32, 33) du corps de guidage (31) **caractérisé par le fait que**
- le corps de guidage (31) de l'élément de guidage (30) comprend un trou passant allongé longitudinal (38), et que ledit élément de fixation (70) peut être placé en différentes positions le long dudit trou passant allongé longitudinal (38).

2. Ensemble de tige de selle (1), conformément à la revendication 1, **caractérisé par le fait que** le corps de guidage (31) de l'élément de guidage (30) a une largeur correspondant à l'encoche (14), de telle sorte qu'il puisse être déplacé dans le sens de la longueur le long de l'encoche (14) mais pas déplacé latéralement à l'intérieur de ladite encoche (14).

3. Ensemble de tige de selle (1), conformément à la revendication 1, **caractérisé par le fait que** le trou passant allongé longitudinal (38) du corps de guidage (31) comprend une première section (38a) qui s'étend à partir de la première face (34) et une deuxième section (38b) qui s'étend à partir de la deuxième face (35) à la première section (38a), où lesdites sections (38a, 38b) sont séparées par une surface de siège (39).

4. Ensemble de tige de selle (1), conformément à la revendication 3, **caractérisé par le fait que** ledit élément de fixation (70) consiste en un boulon (71) et un écrou (72), où ledit boulon (71) comprend une tête (73) et un corps fileté (74), et dans ladite position bloquée le corps fileté (74) est disposé en travers de ladite première section (38a) et ladite deuxième section (38b) du corps de guidage (31), et l'écrou (72) n'est pas rotatif et au moins partiellement logé dans ladite deuxième section (38b), supportée contre ladite surface de siège (39) du corps de guidage (31) et fixée à une extrémité du corps fileté (74) qui dépasse de ladite surface de siège (39) vers ladite deuxième section (38b).

5. Ensemble de tige de selle (1), conformément à la revendication 4, **caractérisé par le fait que** ledit élément de fixation (70) comprend également un joint élastique (75) pour installer la tête (73).

6. Ensemble de tige de selle (1), conformément à la revendication 1, **caractérisé par le fait que** dans ladite position bloquée, l'élément d'arrêt (20) est plus proche de l'extrémité supérieure (2) de l'ensemble de tige de selle (1) que le corps de guidage (31).

7. Ensemble de tige de selle (1), conformément à la revendication 1, **caractérisé par le fait que** dans ladite position bloquée, l'élément d'arrêt (40) est plus proche de l'extrémité inférieure (3) de l'ensemble de tige de selle (1) que le corps de guidage (31).

8. Ensemble de tige de selle (1), conformément à la revendication 1, **caractérisé par le fait qu'**au moins un élément d'arrêt (20; 40) peut être fixé à la base (15) de l'encoche (14) du corps tubulaire (10).

9. Ensemble de tige de selle (1), conformément à la revendication 8, **caractérisé par le fait que** ladite base (15) comprend plusieurs trous séparés (50) pour fixer au moins un élément d'arrêt (20 ; 40) dans différentes positions dans le sens de la longueur.

10. Ensemble de tige de selle (1), conformément à la revendication 1, **caractérisé par le fait que**, dans ladite position bloquée, ledit au moins un élément d'arrêt (20 ; 40) ne dépasse pas à l'extérieur de l'encoche (14).

11. Ensemble de tige de selle (1), conformément à la revendication 1, **caractérisé par le fait qu'**au moins ledit élément d'arrêt (40) comprend un boulon qui est fixé à un trou (50) dans la base (15) de l'encoche (14), où ledit boulon a une tête (44) qui, dans ladite position bloquée, est totalement insérée dans l'encoche (14), et où ladite tête (44) comprend ladite première extrémité longitudinale (42) et ladite deuxième extrémité longitudinale (43).

12. Ensemble de tige de selle (1), conformément à la revendication 1, **caractérisé par le fait qu'**au moins un corps d'arrêt (21) dudit élément d'arrêt (20) est allongé et comprend un trou passant allongé longitudinal (28), et **par le fait que** comprend un boulon (60) qui est fixé dans un trou (50) dans la base (15) de l'encoche (14) et que peut être placé dans différentes positions le long dudit trou passant allongé longitudinal (28) pour régler la position longitudinale dudit corps d'arrêt (21) à l'intérieur de ladite encoche (14), et où ledit corps d'arrêt (21) comprend ladite première extrémité (22) et ladite deuxième extrémité (23).

13. Ensemble de tige de selle (1), conformément à la revendication 12, **caractérisé par le fait que** ledit trou passant (28) dudit corps d'arrêt (21) comprend une première section (28a) qui s'étend de la première face (24) du corps d'arrêt (21) et une deuxième section (28b) qui s'étend de la deuxième face (25) du corps d'arrêt (21) à la première section (28a), où lesdites sections (28a, 28b) sont séparées par une surface de siège (29) dans laquelle ledit boulon (60) est logé, où ledit boulon (60) ne dépasse pas à l'extérieur de ladite deuxième section (28b).

14. Ensemble de tige de selle (1), conformément aux revendications 4 et 12, **caractérisé par le fait que** ledit élément de guidage (30) et ledit élément d'arrêt (20) comprenant un corps d'arrêt (21) muni qu'un trou passant allongé longitudinal (28), sont identiques et interchangeables.

15. Cadre de vélo, comprenant un ensemble de tige de selle (1) conformément à l'une quelconque des revendications ci-dessus.

16. Vélo, comprenant un ensemble de tige de selle (1) conformément à l'une quelconque des revendications 1 à 14 ci-dessus.
